Europäisches Patentamt

European Patent Office

Office européen des brevets

(11) Numéro de publication: **0 133 074**
**A2**

## DEMANDE DE BREVET EUROPEEN

(21) Numéro de dépôt: **84401368.0**

(22) Date de dépôt: **27.06.84**

(51) Int. Cl.⁴: **B 61 D 7/26**
**B 61 D 7/30, B 60 P 1/56**

(30) Priorité: **29.07.83 FR 8312524**

(43) Date de publication de la demande:
**13.02.85 Bulletin 85/7**

(84) Etats contractants désignés:
**BE CH DE GB IT LI LU NL**

(71) Demandeur: **Etablissements FAUVET-GIREL**
**40 boulevard Henri Sellier**
**F-92150 Suresnes(FR)**

(72) Inventeur: **Cardon, Christian**
**34, rue de Thélus Roclincourt**
**F-62223 Saint Laurent Blangy(FR)**

(74) Mandataire: **Loyer, Bertrand et al,**
**Cabinet Pierre Loyer 18, rue de Mogador**
**F-75009 Paris(FR)**

(54) **Perfectionnement aux trappes de déchargement pour trémies de wagons.**

(57) Trappe pour trémie de wagon à ouverture et fermeture automatiques. La trappe (3) est portée par deux paires de galets, une paire supérieure (4) et une paire inférieure (5), chaque galet se déplacant dans une lumière (7, 8) incurvée, ces deux lumières n'étant pas parallèles de sorte que, en s'ouvrant sous l'effet du poids de la matière contenue dans la trémie (1), la trappe (3) se déplace à la fois angulairement, vers l'extérieur et vers le haut et qu'ainsi son centre de gravité soit en position ouverte à un niveau supérieur à celui qu'il occupe en position fermée, la trappe (3) étant ouverte par la poussée de la matière et fermée par gravité.

Fig.1

EP 0 133 074 A2

Croydon Printing Company Ltd.

Perfectionnement aux trappes de déchargement
pour trémies de wagons

La présente invention a pour objet un perfectionnement aux trappes de déchargement pour trémies de wagons.

Il est connu d'obturer la base des trémies de wagons de chemins de fer de deux trappes symétriques qui s'ouvrent latéralement de façon que le produit contenu dans la trémie s'écoule hors de la trémie pour tomber entre les deux rails sur lesquels se déplace le wagon. Il est en particulier connu de maintenir les trappes en position fermée, l'une contre l'autre par un dispositif de verrouillage qui est actionné par une commande placée le long de la voie; ces trappes s'ouvrent alors sous l'effet de la poussée exercée sur elles par le produit contenu dans la trémie en armant un accumulateur d'énergie qui peut être soit un système à ressort, soit un système hydraulique; les trappes sont maintenues ouvertes par un autre système de verrouillage qui est ultérieurement actionné par une deuxième commande placée également le long de la voie.

Tous les dispositifs de ce genre présentent l'inconvénient de nécessiter plusieurs mécanismes de verrouillage et des accumulateurs d'énergie qui, comme le montre l'expérience, résistent mal à l'usure engendrée par les chocs répétés auxquels ils sont soumis.

Pour remédier à cet inconvénient, la demanderesse a décrit dans son brevet français 2 431 946 un système de trappes latérales articulées chacune autour d'un axe horizontal parallèle à l'axe longitudinal du wagon, le mouvement de rotation des trappes étant commandé par un ensemble de bielles et de cames actionné par un levier central prenant appui sur une rampe placée entre les rails.

Il s'avère à l'usage que cet ensemble de leviers résiste également assez mal aux sollicitations provoquées par un usage prolongé.

La présente invention a pour objet un dispositif de commande de trappes conçu de façon que les différentes pièces mobiles ne soient pas soumises à des efforts importants et résistent donc mieux à l'usure.

Le dispositif selon la présente invention est caractérisé par le fait que chaque trappe est portée par deux paires de galets, une paire inférieure et une paire supérieure, chaque galet se déplaçant dans une lumière courbe, ces deux lumières n'étant pas parallèles de sorte qu'en s'ouvrant la trappe se déplace à la fois angulairement, vers l'extérieur et vers le haut, de telle sorte que son centre de gravité soit, en position ouverte, situé à un niveau supérieur à celui qu'il occupe en position fermée et qu'ainsi la trappe soit ouverte par la poussée du produit et refermée par gravité.

De préférence, le système mécanique de commande comporte au moins un verrou mobile bloquant l'un des galets de la paire inférieure de galet dans l'une et l'autre des deux positions extrêmes que peut occuper ledit galet.

De préférence, ledit verrou est associé à un levier de rappel complémentaire, attelé à un accumulateur d'énergie, qui facilite un verrouillage énergique en fin de course de fermeture.

A titre d'exemple non limitatif et pour faciliter la compréhension de l'invention, on a représenté aux dessins annexés:

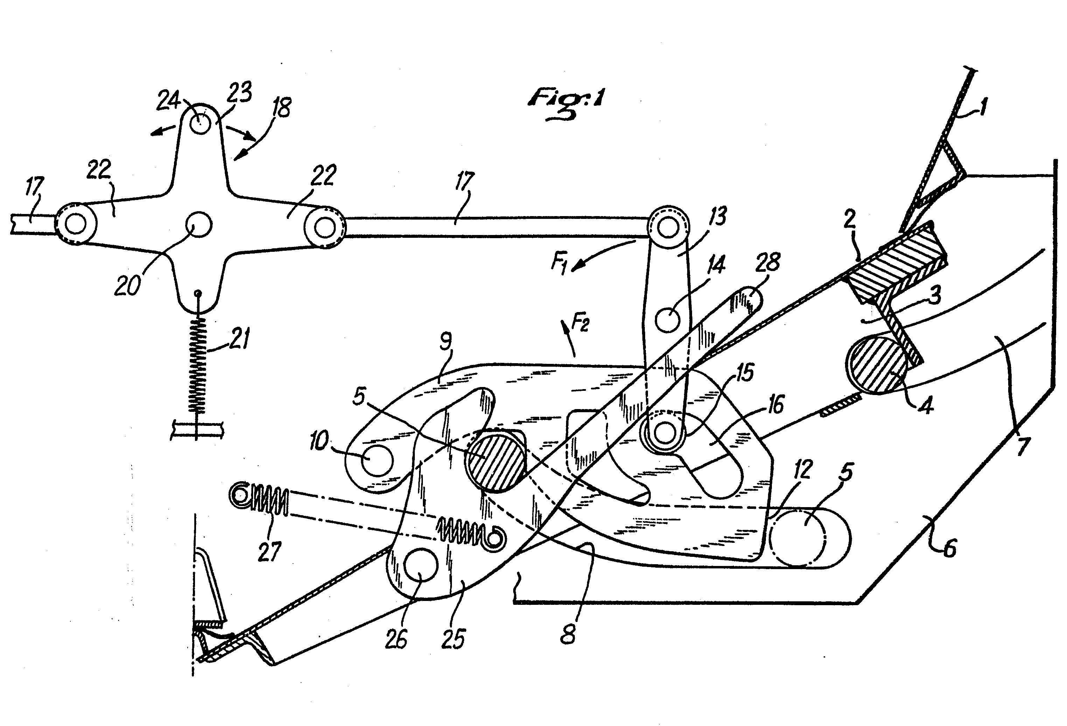

. figure 1, une vue en élévation latérale illustrant un mode de réalisation d'une trappe selon l'invention;

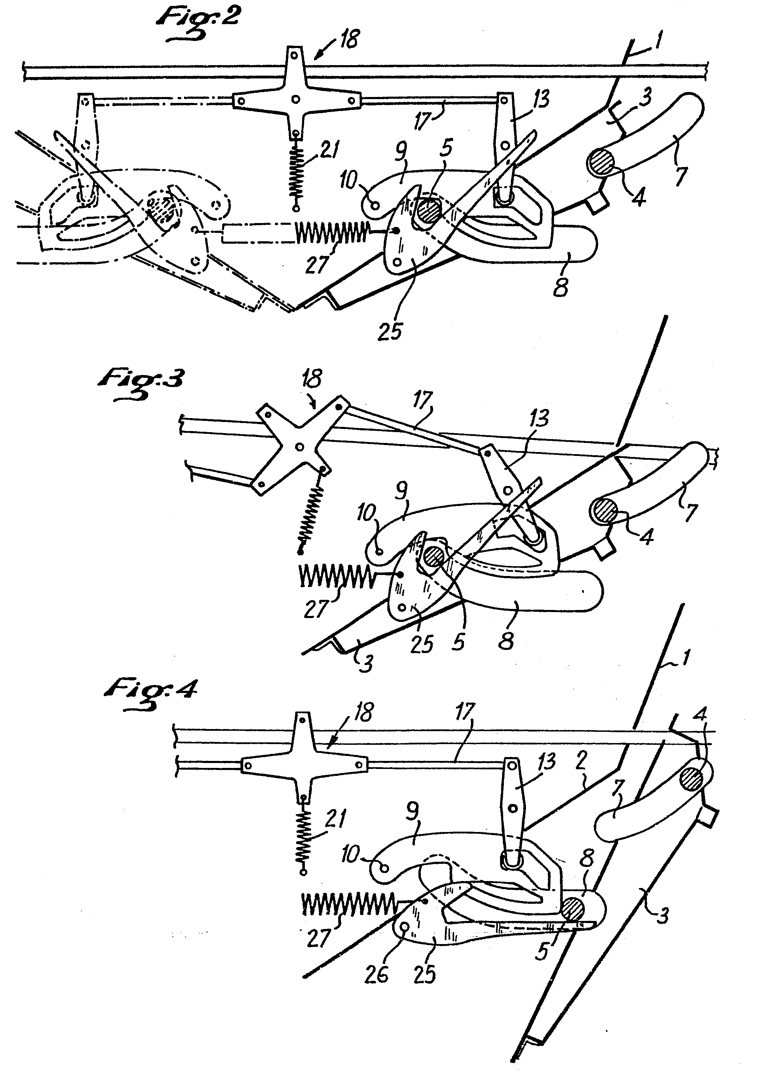

. figures 2 à 4, trois vues schématiques illustrant les positions successives de la trappe de la figure 1 en position "verrouillée fermée", "ouverture" et "verrouillée ouverte";

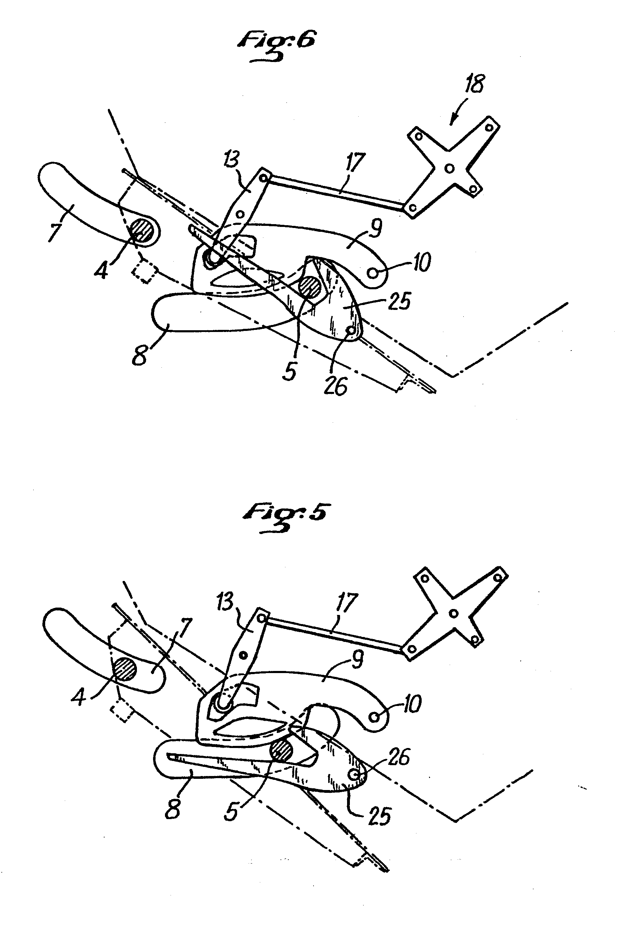

. figures 5 et 6, deux vues schématiques illustrant les positions successives de la trappe symétrique de celle de la figure 1 en train de se refermer.

Sur la figure 1, la trémie du wagon n'est représentée que par sa partie inférieure 1 qui est munie d'une ouverture 2 qui est obturée par une trappe 3. Sur cette figure seulement un des côtés de la trémie est représenté et donc une seule trappe 3, la trémie en comportant deux, symétriques par rapport à son plan longitudinal médian, comme on peut le voir à la figure 2. Ces deux trappes sont identiques et munies des mêmes mécanismes.

Comme on peut le voir sur les figures, chaque trappe 3 est munie à sa partie haute de galets supérieurs 4 et, pratiquement à mi-hauteur, de galets inférieurs 5. De préférence, il y a un galet tel que 4 de chaque côté de la trappe et également en ce qui concerne les galets 5 de sorte que chaque trappe comporte une paire de galets supérieurs 4 et une paire de galets inférieurs 5. La trappe 3 est encadrée de chaque côté par une paroi 6, perpendiculaire à la paroi de la trémie 1, chaque paroi 6 comportant deux fenêtres 7 et 8, dans lesquelles peuvent rouler les galets 4 et 5. La fenêtre 7 est légèrement incurvée et est orientée obliquement vers le haut et vers l'extérieur. La fenêtre 8 est d'abord incurvée puis rectiligne, la partie incurvée est orientée vers le bas et vers l'extérieur, tandis que la partie rectiligne est pratiquement horizontale. Il en résulte, comme cela est illustré aux figures 3 et 4 que la trappe 3 s'ouvre en pivotant vers le bas, en s'écartant latéralement et en s'élevant vers le haut, de sorte que lorsqu'elle est complètement ouverte (figure 4), la position de son centre de gravité est plus haute qu'en position fermée (figure 3).

La trappe 3 est maintenue en position fermée par un verrou 9 qui est porté de façon pivotante par un axe 10. Ce verrou comporte deux parois 11 et 12 faisant butées. Dans la position "verrouillée fermée", le galet 5 est immobilisé par appui contre la butée 11 (figures 1, 2). Dans la position "verrouillée ouverte", le galet 5 est immobilisé par appui contre la butée 12 (figure 4).

Le verrou 9 est manoeuvré par un levier basculant 13 monté à pivotement sur un axe 14, comportant à son extrémité inférieure un galet 15 se déplaçant dans une fenêtre 16 ménagée dans le verrou 9 et attelé à son extrémité supérieure à une bielle 17 elle-même attelée à un levier basculant 18. Le levier basculant 18 est monté à pivotement sur un axe 19 et est maintenu en position neutre par un ressort 20; il comporte deux branches symétriques 22 attelées à deux bielles symétriques 17, elles-mêmes attelées à deux leviers basculants symétriques 13, commandant deux verrous symétriques 9, il comporte en plus une branche médiane 23 qui par un axe 24 peut être attelée à tout dispositif de commande, non représenté. On voit que lorsque le levier 18 est déplacé selon l'une ou l'autre des flèches par un dispositif quelconque placé le long de la voie, non représenté parce que connu, chacune des branches 17 exerce une traction sur le levier basculant 13 auquel elle est attelée, selon la flèche $F_1$. Cela a pour effet qu'en se déplaçant dans la lumière 16, le galet 15 fait pivoter le verrou 9 autour de son axe 10 selon la flèche $F_2$, ce qui libère le galet 5.

D'autre part, le mécanisme comporte un levier complémentaire 25, monté à pivotement sur un axe 26 et rappelé par un ressort 27. Ce levier complémentaire a la forme d'un crochet et comporte une queue 28. Le galet 5 est suffisamment large pour être en contact non seulement avec le verrou 9 mais aussi avec le levier 25.

Le fonctionnement du mécanisme décrit ci-dessus est décrit ci-après en relation avec les figures 2 à 6.

La figure 2 représente schématiquement les pièces dans la position de la figure 2, la trappe 3 est fermée et verrouillée par appui du galet 5 contre la paroi 11 du verrou 9.

Lorsque le levier basculant 18 est actionné (figure 3), la bielle 17 fait basculer le levier 13 qui soulève le verrou 9 en le faisant pivoter vers le haut autour de son axe 10. Le galet 5 est alors libéré et la trappe 3 est prête à s'ouvrir.

Sous l'effet du poids de la matière contenue dans la trémie 1, la trappe 3 s'ouvre, les galets 5 et 4 parcourant les fenêtres 7 et 8. Le levier basculant 18 n'ayant été actionné que d'une façon instantanée est libre de revenir sous l'action du ressort 21, de sorte que, quand le galet est passé dans la fenêtre 8 au-delà du verrou 9, celui-ci retombe et le galet 5 est alors bloqué contre retour par appui contre la paroi 12 du verrou 9. La fenêtre est alors (figure 4) verrouillée en position ouverte, position dans laquelle son centre de gravité est plus haut qu'au départ. En roulant dans la fenêtre 8, le galet 5 a appuyé sur le levier 25 et l'a fait pivoter jusqu'à ce que la queue 28 dudit levier 25 soit pratiquement horizontale.

Le mouvement de fermeture est illustré aux figures 5 et 6 qui représentent l'autre trappe 3, symétrique de celle représentée aux figures 1 à 4.

Lorsque le levier 18 est à nouveau actionné, il provoque par la bielle 17 et le levier basculant 13, le soulèvement du verrou 9 qui pivote autour de l'axe 10, de telle sorte que sa paroi d'appui 12 libère le galet 5. Sous l'effet de son poids la trappe 3 redescend alors vers sa position basse d'origine (figure 5). Au fur et à mesure que le galet 5 parcourt la lumière 8, le levier-complémentaire 25 bascule sous l'effet de son ressort 27 et accélère le mouvement dudit galet 5, de sorte que la fermeture de la trappe 3 est rendue plus énergique. En fin de course du galet 5, le verrou 9 retombe derrière lui et la paroi 11 dudit verrou 9 vient bloquer le galet, de plus, le crochet de levier 25 vient compléter ce verrouillage qui est ainsi assuré par deux éléments, ce qui procure une sécurité complémentaire.

Dans l'exemple représenté, le même levier 18 commande simultanément les deux trappes 3 se faisant face, cependant, il est bien évident que l'on peut disposer deux leviers tels que 18 chacun n'actionnant qu'un seul verrou 9, on peut alors n'ouvrir qu'une trappe à la fois.

Cette disposition utilise pour récupérer l'énergie fournie à l'ouverture par la masse du produit non pas un accumulateur d'énergie comme dans les dispositifs connus mais un soulèvement partiel de la trappe qui retombe ensuite par gravité. De plus, le verrou 9 et le levier complémentaire 25 n'ont pratiquement aucun effort à fournir de sorte que l'usure des pièces est réduite au minimum et que la fiabilité dans le temps du mécanisme ainsi décrit est grandement supérieur à celles des mécanismes connus.

REVENDICATIONS

1. Trappe pour trémie de wagon à ouverture et fermeture automatiques, caractérisée par le fait que ladite trappe (3) est portée par deux paires de galets, une paire supérieure (4) et une paire inférieure (5), chaque galet se déplaçant dans une lumière (7, 8) incurvée, ces deux lumières n'étant pas parallèles de sorte que, en s'ouvrant sous l'effet du poids de la matière contenue dans la trémie (1), la trappe (3) se déplace à la fois angulairement, vers l'extérieur et vers le haut et qu'ainsi son centre de gravité soit en position ouverte à un niveau supérieur à celui qu'il occupe en position fermée, la trappe (3) étant ouverte par la poussée de la matière et fermée par gravité.

2. Trappe selon la revendication 1, dans laquelle la fenêtre (7) dans laquelle se déplace le galet supérieur (4) est légèrement incurvée et est orientée obliquement vers le haut et vers l'extérieur, tandis que la fenêtre (8) dans laquelle se déplace le galet inférieur (5) est d'abord incurvée puis rectiligne, la partie incurvée étant orientée vers le bas et vers l'extérieur et la partie rectiligne étant sensiblement horizontale de sorte que la trappe (3) s'ouvre en pivotant vers le bas en s'écartant latéralement et en s'élevant vers le haut.

3. Trappe selon la revendication 1 ou 2, dans laquelle le galet inférieur (5) est bloqué soit en position ouverte soit en position fermée par un verrou pivotant (9) qui se soulève pour livrer passage audit galet et retombe à sa position d'origine après passage du galet en l'immobilisant.

4. Trappe selon la revendication 3, dans laquelle le pivotement du verrou (9) est actionné par une tringlerie (13, 17) elle-même actionnée par un

9 0133074

levier (18) commandé par une commande placée le long de
la voie.

5. Trappe selon la revendication 4, dans
laquelle le verrou (9) est associé à un levier complémentaire pivotant (25) rappelé par un ressort (26), ce
levier étant abaissé par le galet (5) lors de l'ouverture et accélérant le mouvement dudit galet (5) lors
de la fermeture.

6. Trappe selon la revendication 5, dans
laquelle le levier complémentaire (25) a une forme de
crochet dans lequel vient se loger le galet (5) en position de fermeture de façon à constituer une sécurité
complémentaire en position fermée.

Fig.1

1/3

0133074

*Fig.2*

*Fig.3*

*Fig.4*

0133074

Fig. 6

Fig. 5